# EUROPÄISCHE PATENTSCHRIFT

(11) **EP 2 210 125 B1**
(45) Veröffentlichungstag und Bekanntmachung des Hinweises auf die Patenterteilung: **09.04.2014**
(21) Anmeldenummer: 08802315.5
(22) Anmeldetag: 18.09.2008
(51) Int. Cl.: G01S 11/14, G10K 11/00

(54) **UNTERWASSERANTENNE**
SUBMARINE ANTENNA
ANTENNE SOUS-MARINE

(30) Priorität: 12.11.2007 DE 102007053801
(43) Veröffentlichungstag der Anmeldung: 28.07.2010
(73) Patentinhaber: ATLAS ELEKTRONIK GmbH, 28309 Bremen (DE)
(72) Erfinder: BUSCH, Rainer, 26131 Oldenburg (DE); WICKER, Kai, 28357 Bremen (DE)
(86) Internationale Anmeldenummer: PCT/EP2008/007792
(87) Internationale Veröffentlichungsnummer: WO 2009/062565

(56) Entgegenhaltungen:
- EP-A- 0 654 953
- GB-A- 1 370 422
- US-A- 4 390 976
- US-A- 4 982 385

## Beschreibung

Die Erfindung betrifft eine Unterwasserantenne zum Anbau an den Bootskörper eines Unterseeboots nach dem Oberbegriff des Anspruchs 1.

Eine als Seitenantenne oder Flankarray bezeichnete bekannte Unterwasserantenne (DE 38 34 669 A1) weist ein im Abstand vom Druckkörper eines Unterseeboots, im folgenden kurz U-Boot genannt, angeordnete Wandleranordnung mit einer Vielzahl von längs des Druckkörpers hintereinander gereihten, voneinander beabstandeten Hydrofonen und einem in Schalleinfallsrichtung hinter den Hydrofonen angeordneten Reflektor auf, der nach dem Feder-Masse-Prinzip ausgelegt ist. Die Hydrofone sind an dem Reflektor über eine Schellenkonstruktion gehalten und der Reflektor ist mit federnden Elementen über eine Dämpfungsschicht an die Körperwandung montiert. Die federnden Elemente sind hinsichtlich auftretender Stoß-, Schwing- und Schockbelastung dimensioniert.

Die Richtcharakteristik einer solchen Seitenantenne hat eine Hauptkeule mit einem kleinen Öffnungswinkel in Horizontalrichtung und einem extrem großen Öffnungswinkel in Vertikalrichtung.

US 4,390,976 offenbart eine akustische Unterwasserantenne mit einer akustischen Schürze an einer Hüllenoberfläche, um die Übertragung von Schiffsgeräuschen zu vermindern. Die dort beschriebene Antenne ist für den Unterwassereinsatz bei Schiffen beschrieben und besteht aus Hydrophonen, die mit Reflektoren in unterschiedlichen Abständen versehen sind.

EP 0 654 953 A1 offenbart eine elektroakustische Wandleranordnung für Unterwasserantennen aus mehreren an einem Träger übereinander äquidistant anzuordnenden Hydrophonen. Die Hydrophone sind zusammen mit einem in Schalleinfallsrichtung hinter ihnen angeordneten Reflektor in einem akustisch transparenten Hartumguss eingebettet.

Eine bekannte Flachantenne (DE 10 2004 037 987 AI) ist aus einer Mehrzahl von paneelartigen Antennenelementen zusammengesetzt. Jedes Antennenelement weist einen akustisch transparenten plattenartigen Kunststoffträger auf, in dem 6x6 in Reihen und Spalten angeordnete Hydrofone und eine als Reflektor dienende biegesteife Platte, die in Schalleinfallsrichtung hinter den Hydrofonen angeordnet ist, eingebettet sind. Eine solche, für Empfangsantennen im mittleren bis höheren Frequenzbereich ausgelegte Flachantenne hat ein gutes Vor-/Rückwärtsverhältnis. Durch die Möglichkeit der addierten Zusammenfassung der Ausgangssignale der in Anbaulage der Antenne in den Spalten vertikal untereinanderliegenden Hydrofone besitzt die Flachantenne auch eine gute Bündelung im vertikalen Empfangsbereich und damit ein relativ gutes Nutz-/Störverhältnis. Die Erzielung des guten Vor-/Rückwärtsverhältnis auch für Empfangsfrequenzen im Tieffrequenzbereich erzwingt eine große Masse des Reflektors, was bei recht langen Seitenantennen zu einem für ein U-Boot nicht akzeptablen Gewicht der Seitenantenne führt.

Der Erfindung liegt die Aufgabe zugrunde, eine Seitenantenne für ein U-Boot zu konzipieren, die den vom U-Boot vorgegebenen Rahmenbedingungen bezüglich Gewicht und Anbauvolumen genügt, ein gutes Nutz-/Störverhältnis auch im vertikalen Empfangsbereich aufweist und eine ausreichend gute Aufklärung des Seegebiets auch im Fernbereich des U-Boots ermöglicht.

Die Aufgabe ist erfindungsgemäß durch die Merkmale im Anspruch 1 gelöst.

Die erfindungsgemäße Unterwasserantenne hat den Vorteil, dass durch die Aufteilung des Reflektors in Reflektorbereiche, die entlang des Bootskörpers mit unterschiedlicher Breite untereinander liegen und auf Empfangsfrequenzbänder in unterschiedlichen Frequenzbereichen abgestimmt sind, der horizontale Öffnungswinkel einer mit den Wandlerelementen der Wandleranordnung gebildeten Richtcharakteristik unverändert bleibt und nur von der Frequenz und Antennenlänge der gesamten Wandleranordnung abhängig ist, der vertikale Öffnungswinkel der Richtcharakteristik dagegen infolge des unterschiedlich abgestimmten Reflexionsverhaltens und der unterschiedlichen vertikalen Breite der Reflektorbereiche von Reflexionsbereich zu Reflexionsbereich variiert. Empfangssignale der Wandlerelemente in einem auf ein bestimmtes Empfangsfrequenzband abgestimmten Reflektorbereich weisen im Vergleich zu Empfangssignalen der Wandlerelemente im benachbarten Reflektorbereich, der auf ein anderes Empfangsfrequenzband abgestimmt ist, wesentlich höhere Pegel auf, so dass die Breite des jeweils abgestimmten Reflektorbereichs die Größe des vertikalen Öffnungswinkels bestimmt, da nur die in ihm angeordneten Wandlerelemente zur Bildung der Richtcharakteristik beitragen. Der oberste Reflektorbereich, der sich vorzugsweise etwas unterhalb der halben Höhe des Bootskörpers befindet, sorgt mit seiner größten Breite für den kleinsten vertikalen Öffnungswinkel der Richtcharakteristik im höchsten Empfangsfrequenzband und somit insbesondere im Nahbereich für eine gute Störschallausblendung von der Wasseroberfläche.

Bei einem solchen Reflektoraufbau wird mit dem oberen Reflektorbereich eine gute vertikale Bündelung der Richtcharakteristik der Unterwasserantenne und damit eine wesentliche Störbefreiung im nahen und mittleren Entfernungsbereich erzielt, was insbesondere für die Bekämpfung von anlaufenden Torpedos mittels vom U-Boot abgeschossener Effektoren, sog. Antitorpedo-Torpedos, von Bedeutung ist. Da für den nur mit dem tieffrequenten Teil der Wandleranordnung erreichbaren Fernbereich der Größe des vertikalen Öffnungswinkels der Richtcharakteristik in Hinblick auf eine Störbefreiung praktisch keine Bedeutung zukommt, ist bei der Auslegung des unteren Bereichs der Wandleranordnung und der entsprechenden Abstimmung des Reflektorbereichs der Schwerpunkt auf ein zum Anbau an das U-Boot akzeptables Gewicht und auf ein an den vom U-Boot vorgegebenen Anbauraum angepasstes Bauvolumen der Unterwasserantenne gelegt. Qualitativ hochwertige Unterwasserantennen mit geringer Falschalarmrate werden üblicherweise so aufgebaut, dass die Wandleranordnung ein gutes Vor-/Rückwärtsverhältnis hat. Hierzu wird durch einen entsprechenden Aufbau des Reflektors und durch Einhalten eines definierten Abstandes zwischen Wandlerelementen und Reflektor sichergestellt, dass einerseits von vorn kommender Nutzschall vom Reflektor auf die Wandlerelemente reflektiert und von hinten kommender Störschall abgeschirmt wird und andererseits zwischen dem direkt einfallenden Nutzschall und dem vom Reflektor reflektierten Nutzschall keine Interferenzen auftreten. Das Vor-/Rückwärtsverhältnis ist abhängig vom Frequenzbereich der Wandleranordnung und bedingt bei tiefen Empfangsfrequenzen eine große Masse des Reflektors und einen großen Abstand zwischen Wandlerelementen und Reflektor. Dadurch, dass nunmehr der tieffrequente Bereich der Wandleranordnung im Vergleich zum mittel- bis hochfrequenten Bereich durch die unterschiedlich bemessenen Breiten der Reflektorbereiche in Vertikalrichtung der Wandleranordnung deutlich kleiner gehalten ist, kann ohne Einbuße der taktischen Qualität der Unterwasserantenne für den Fernbereich die für den tieffrequenten Bereich der Wandleranordnung erforderliche deutlich größere Reflektormasse - und damit das durch die Reflektormasse wesentlich beeinflusste Gesamtgewicht der Unterwasserantenne - relativ klein gehalten werden. Dadurch, dass der tieffrequente Bereich in Anbaulage der Unterwasserantenne unten liegt, steht für den unteren Bereich der Wandleranordnung, der infolge des erforderlichen größeren Abstands zwischen Wandlerelementen und Reflektor eine stark vergrößerte Bautiefe in Schalleinfallsrichtung besitzt, in Anbaulage der Unterwasserantenne wegen der Krümmung des Bootskörpers ein ausreichend großer Bauraum zur Unterbringung zur Verfügung, ohne dass die Unterwasserantenne am Bootskörper über eine seitliche vertikale Grenzlinie hinausragt, die durch eine an den Bootskörper angelegte vertikale Tangente festgelegt ist.

Zweckmäßige Ausführungsformen der erfindungsgemäßen Unterwasserantenne mit vorteilhaften Weiterbildungen und Ausgestaltungen der Erfindung ergeben sich aus den weiteren Ansprüchen.

Gemäß einer vorteilhaften Ausführungsform der Erfindung sind zwei untereinanderliegende Reflektorbereiche mit vorgesetzten Wandlerelementen vorgesehen, die jeweils auf Empfangsfrequenzbänder abgestimmt sind, deren Mittenfrequenzen sich um eine 10er-Potenz unterscheiden, wobei die Breite des unteren Reflektorbereichs etwa ein Sechstel und die Breite des oberen Reflektorbereichs ungefähr fünf Sechstel der in Anbaulage, z.B. an einem U-Boot, in Vertikalrichtung gesehenen Gesamtbreite des Reflektors beträgt. Eine solche Aufteilung ermöglicht einerseits eine ausreichend gute Bündelung der Richtcharakteristik in Vertikalrichtung und hält andererseits das Gewicht der Unterwasserantenne in für das U-Boot akzeptablen Grenzen.

Die Erfindung ist anhand eines in der Zeichnung dargestellten Ausführungsbeispiels im folgenden näher beschrieben. Es zeigen:
- Fig. 1: eine perspektivische Ansicht eines U-Boots mit Seitenantennen,
- Fig. 2: einen Schnitt einer Seitenantenne längs der Linie II - II in Fig. 1 mit Wandleranordnung, Träger und Hüllkörper,
- Fig. 3: ausschnittweise einen Schnitt der Wandleranordnung der Unterwasserantenne gemäß Linie III - III in Fig. 2,
- Fig. 4: einen Schnitt längs der Linie IV - IV in Fig. 3.

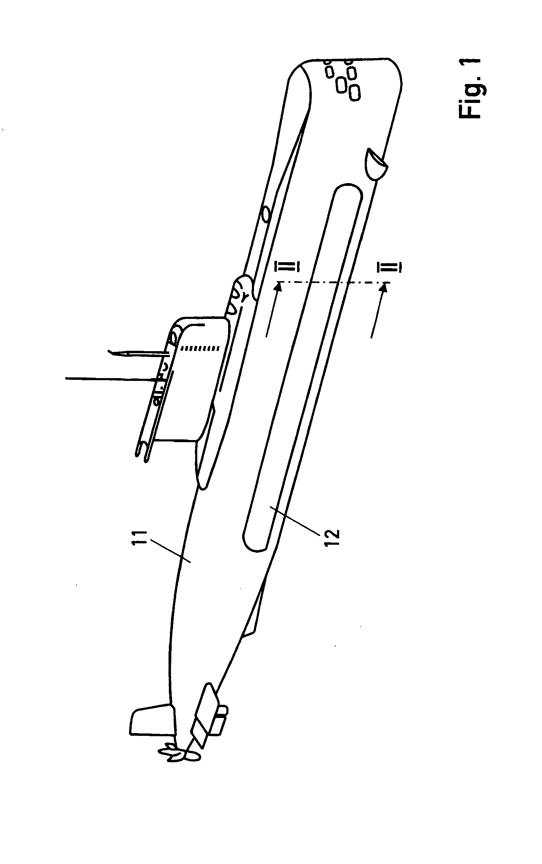

Fig. 1 zeigt ein U-Boot in perspektivischer Darstellung, an dessen Bootskörper 11 sowohl auf der Steuerbordseite als auch auf der Backbordseite jeweils eine in Längsrichtung des Bootskörpers 11 sich erstreckende Unterwasserantenne 12, auch Seitenantenne oder Flankarray genannt, angeordnet ist. In Fig. 1 ist lediglich die steuerbordseitige Unterwasserantenne 12 zu sehen.

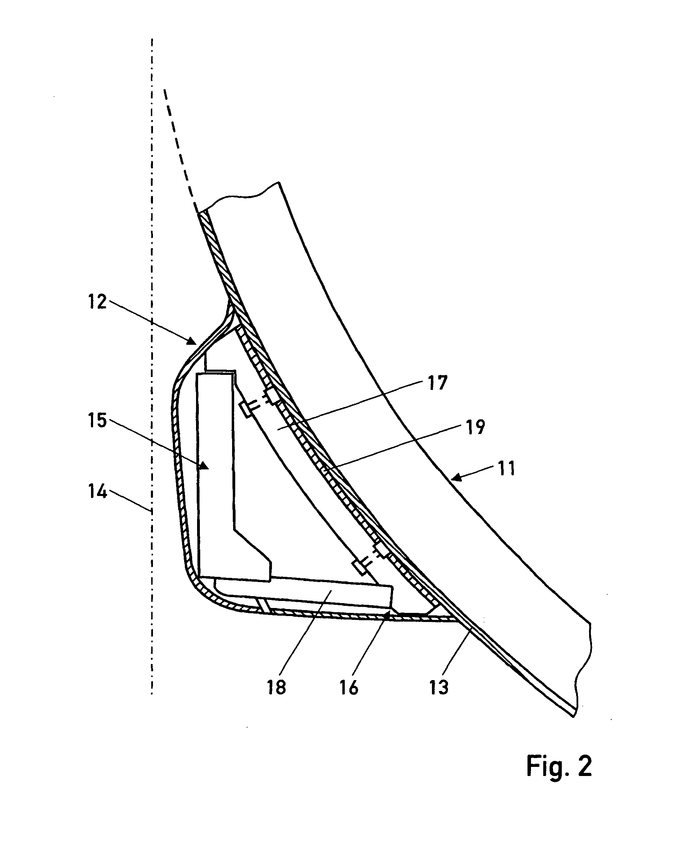

Wie aus der vergrößerten Schnittdarstellung in Fig. 2 hervorgeht, sind die Unterwasserantennen 12 unterhalb der größten horizontalen Breite des Bootskörpers 11 an der Körperwand 13 des Bootskörpers 11 befestigt und so gestaltet, dass sie hinter einer Grenzlinie 14 verbleiben, die durch eine an den Bootskörper 11 angelegte, vertikale Tangente beschrieben werden kann. Beide Unterwasserantennen 12 weisen den gleichen konstruktiven Aufbau auf, so dass im folgenden lediglich die in Fig. 1 und 2 skizzierte steuerbordseitige Unterwasserantenne 12 beschrieben wird.

Die Unterwasserantenne 12 weist eine in Anbaulage sich längs des Bootskörpers 11 erstreckende Wandleranordnung 15, einen Träger 16, an dem die Wandleranordnung 15 befestigt ist, und einen Wandleranordnung 15 und Träger 16 umschließenden Hüllkörper 17 aus akustisch transparentem Material auf, der am Träger 16 und/oder an der Körperwand 13 des Bootskörpers 11 selbst, befestigt ist. In der Schnittdarstellung der Fig. 2 sind lediglich Hüllkörper 17 und Körperwand 13 des Bootskörpers 11 im Schnitt dargestellt, während Träger 16 und Wandleranordnung 15 in Seitenansicht zu sehen sind. Der Träger 16 ist am Bootskörper so positioniert, dass die Wandleranordnung 15 mit vertikaler Ausrichtung in einem Sektorbereich des Bootskörpers 11 liegt, dessen Sektorachse mit einer durch die Achse des Bootskörpers 11 verlaufenden Horizontalen einen Winkel in der Größenordnung von 30° einschließt. Der Träger 16 besitzt vorzugsweise eine Strebenstruktur mit Grundstreben 17 und Stützstreben 18. Die Stützstreben 17 sind über eine Biegewellen absorbierende Dämpfungsschicht 19 an der Körperwand 13 des Bootskörpers 11 befestigt. Die Stützstreben 18 sind einerseits an den Grundstreben 17 und andererseits an der Wandleranordnung 15 festgelegt und sind so ausgerichtet, dass sie mit der in Anbaulage vertikal ausgerichteten Wandleranordnung 15 einen stumpfen Winkel einschließen. Die Stützstreben 18 greifen unten an der Wandleranordnung 15 an, während das obere Ende der Wandleranordnung 15 an den Grundstreben 17 befestigt ist.

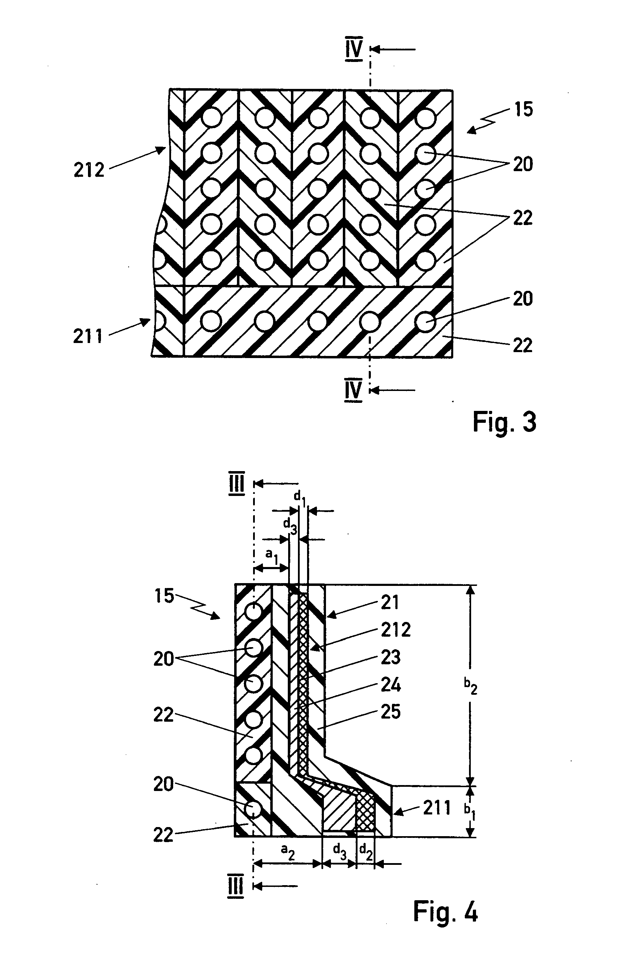

Die erfindungsgemäße Wandleranordnung 15, die in Fig. 3 und 4 in verschiedenen Schnittdarstellungen schematisiert gezeigt ist, weist eine Vielzahl von Wandlerelementen 20, auch Hydrofone genannt, die in einer Ebene angeordnet sind, und einen in Schalleinfallsrichtung hinter den Wandlerelementen 20 angeordneten Reflektor 21 auf. Die Wandlerelemente 20 sind voneinander beabstandet hintereinander und untereinander aufgereiht, so dass parallele Wandlerelement-Reihen vorhanden sind, die sich sowohl in Längsrichtung der Wandleranordnung 15 als auch quer dazu (in Anbaulage in etwa vertikal) erstrecken. Die nachstehend Breite genannte Quererstreckung der Wandleranordnung 15 ist deutlich kleiner als die Länge der Wandleranordnung 15. In dem in Fig. 3 und 4 dargestellten Ausführungsbeispiel der Wandleranordnung 15 sind jeweils fünf Wandlerelemente 20 in vertikal untereinander gereiht. Jede Reihe von Wandlerelementen 20 ist in einen Stab 22 aus akustisch transparentem Material, z.B. Polyurethan, eingegossen. Eine Vielzahl solcher Stäbe 22 sind nebeneinander angeordnet. Die sechsten Wandlerelemente 20 in jeder Reihe sind in Gruppen zu jeweils fünf Wandlerelementen ebenfalls in einen Stab 22 eingegossen. Mehrere der letztgenannten Stäbe 22 sind hintereinander in Längsrichtung der Wandleranordnung 15 angeordnet. Alle Stäbe 22 sind aneinandergereiht auf dem Reflektor 21 befestigt. Alternativ können mehre parallele Reihen von Wandlerelementen 20 in einem plattenförmigen Flächenelement aus akustisch transparentem Material integriert sein. Mehrere solcher Flächenelemente werden dann aneinandergesetzt und auf dem Reflektor 21 befestigt. Der Aufbau eines solchen plattenförmigen Flächenelements mit Wandlerelementen 20 ist in der DE 10 2004 038 033 B3 (Fig. 3 und Anspruch 7) beschrieben.

Wie aus der schematisierten Schnittdarstellung in Fig. 4 ersichtlich ist, ist der Reflektor 21 als Masse-Feder-System aufgebaut und weist eine schallweiche Platte 23 und eine Masseplatte 24 auf, die auf der in Schalleinfallsrichtung weisenden Oberfläche der schallweichen Platte 23 aufliegt. Die schallweiche Platte 23 ist eine elastische Weichstoffplatte, z.B. aus Polyurethan-Schaum, während die Masseplatte aus Stahl, Blei oder Bleischrott hergestellt ist. Die beiden aufeinanderliegenden Platten 23, 24 sind in einem Hartumguss 25 aus akustisch transparentem Material, vorzugsweise aus Polyurethan, vollständig eingeschlossen. Der Hartumguss 25 definiert auch den Abstand der Masseplatte 24 von den Wandlerelementen 20.

Die Wandleranordnung 15 ist so konzipiert, dass ein in Anbaulage unterer, kleiner Bereich der Wandleranordnung 15 auf Empfangsfrequenzen im Tieffrequenzbereich und ein in Anbaulage oberer, deutlich größerer Bereich der Wandleranordnung 15 auf Empfangsfrequenzen im mittleren bis höheren Frequenzbereich ausgelegt ist. Jeder der beiden Bereiche erstreckt sich über die gesamte Länge der Wandleranordnung 15. Für die diesbezügliche Auslegung der Wandleranordnung 15 ist der Reflektor 21 in zwei Reflektorbereiche 211 und 212 mit unterschiedlicher Breite b₁, b₂ unterteilt. Jeder der Reflektorbereiche 211, 212 ist in seinem Reflexionsverhalten auf ein Empfangsfrequenzband aus den beiden Frequenzbereichen abgestimmt. Die Empfangsfrequenzbänder sind so gewählt, dass ihre Mittenfrequenzen sich z.B. um eine Zehnerpotenz unterscheiden. Der untere Reflektorbereich 211 ist in seinem Reflexionsverhalten auf die Mittenfrequenz des Empfangsfrequenzbands im Tieffrequenzbereich abgestimmt und weist die in Vertikalrichtung gesehene kleinere Breite b₁ auf, die im Ausführungsbeispiel etwa 1/6 der Gesamtbreite beträgt. Dem unteren Reflektorbereich 211 ist im Ausführungsbeispiel eine einzige, in Längsrichtung sich erstreckende Reihe von Wandlerelementen 20 vorgeordnet. Der obere Reflektorbereich 212 ist in seinem Reflexionsverhalten auf die Mittenfrequenz des Empfangsfrequenzbands im mittleren bis hohen Frequenzbereich abgestimmt und weist die größere Breite b₂ auf, die im Ausführungsbeispiel etwa 5/6 der Gesamtbreite des Reflektors 21 beträgt. Diesem Reflektorbereich 212 sind im Ausführungsbeispiel fünf Reihen von Wandlerelementen 20 vorgeordnet. Zur Anpassung des Reflexionsverhaltens des Reflektors 21 an die Empfangsfrequenzbänder ist die in Schalleinfallsrichtung gesehene Tiefe der beiden Reflektorbereiche 211, 212, die durch die Dicken von schallweicher Platte 23 und Masseplatten 24 sowie den Abstand der Wandlerelemente 20 von der Masseplatte 24 bestimmt ist, unterschiedlich bemessen.

Im Ausführungsbeispiel der Fig. 4 ist die Dicke der schallweichen Platte 23 im oberen Reflektorbereich 212 mit d₁ und im unteren Reflektorbereich 211 mit d₂ ausgewiesen. Die Dicke der Masseplatte 24 ist in Fig. 4 im oberen Reflektorbereich 212 mit d₃ und im unteren Reflektorbereich 211 mit d₄ bezeichnet. Der Abstand des Reflektors 21 von den Wandlerelementen 20 ist in Fig. 1 für den oberen Reflektorbereich 212 mit a₁ und für den unteren Reflektorbereich 211 mit a₂ eingetragen. Wie aus Fig. 4 ohne weiteres zu erkennen ist, ist die Dicke d₂ der schallweichen Platte 23 und die Dicke d₄ der Masseplatte 24 im unteren Reflektorbereich 211 deutlich größer als die Dicke d₁ der schallweiche Platte 23 und die Dicke d₂ der Masseplatte 24 im oberen Reflektorbereich 212. Beispielhaft ist die Dicke d₁ und die Dicke d₂ jeweils mit 4 mm und die Dicke d₃ mit 15 mm und die Dicke d₄ mit 30 mm gewählt. Wie ebenfalls in Fig. 4 zu erkennen ist, ist der Abstand a₂ der Masseplatte 24 von der Ebene der Wandlerelemente 20 im unteren Reflektorbereich 211 deutlich größer als der diesbezügliche Abstand a₁ im oberen Reflektorbereich 212. Die beiden Abstände a₁ und a₂ sind wiederum durch die unterschiedlichen Mittenfrequenzen der beiden Empfangsfrequenzbänder bestimmt und so bemessen, dass keine störenden Interferenzen zwischen direkt einfallendem und von dem Reflektor 21 auf die Wandlerelemente 20 reflektiertem Nutzschall auftreten.

## Patentansprüche

1. Unterwasserantenne zum Anbau an den Bootskörper eines Unterseeboots mit einer sich in Anbaulage längs des Bootskörpers (11) erstreckenden, flächenhaft ausgedehnten Wandleranordnung (15), die eine Vielzahl von nebeneinander und untereinander beabstandet angeordneten, elektroakustischen Wandlerelementen(20), insbesondere Hydrophonen, und einen in Schalleinfallsrichtung hinter den elektroakustischen Wandlerelementen (20) angeordneten Reflektor (21) mit einer über alle nebeneinander angeordneten Wandlerelemente (20) sich erstreckenden Länge und einer über alle untereinander angeordneten Wandlerelemente (20) sich erstreckenden Breite aufweist, **dadurch gekennzeichnet, dass** der Reflektor (21) als Feder-Masse-System mit einer schallweichen Platte (23), vorzugsweise einer elastischen Weichstoffplatte, und mit einer auf der in Schalleinfallsrichtung weisenden Oberfläche der schallweichen Platte (23) aufliegenden Masseplatte (24), vorzugsweise aus Stahl oder Blei, ausgebildet ist, dass der Reflektor (21) in untereinanderliegende Reflektorbereiche (211, 212) unterteilt ist, die eine über die Länge des Reflektors (21) sich erstreckende Länge und eine vom untersten zum obersten Reflektorbereich (211, 212) zunehmende Breite (b₁, B₂) aufweisen und in ihrem Reflexionsverhalten auf Empfangsfrequenzbänder aus unterschiedlichen Frequenzbereichen dadurch abgestimmt sind, dass die in Schalleinfallsrichtung gesehene Dicke des Reflektors (21) und der Abstand der Wandlerelemente (20) vom Reflektor (21) in dem jeweiligen Reflektorbereich (211, 212) auf die Mittenfrequenz eines dem jeweiligen Reflektorbereich (211, 212) zugeordneten Empfangsfrequenzbands abgestimmt ist, wobei zur Zuordnung des Empfangsfrequenzbands aus dem höchsten Frequenzbereich zu dem in Anbaulage obersten Reflektorbereich (212) die Dicke des Reflektors (21) und dessen Wandlerelementabstand im obersten Reflektorbereich (212) am kleinsten und zur Zuordnung des Empfangsfrequenzbands aus dem niedrigsten Frequenzbereich zu dem in Anbaulage untersten Reflektorbereich (211) die Dicke des Reflektors (21) und dessen Wandlerelementabstand im untersten Reflektorbereich (211) am größten sind.

2. Unterwasserantenne nach Anspruch 1, **dadurch gekennzeichnet, dass** zwei untereinanderliegende Reflektorbereiche (211, 212) vorgesehen sind, dass die Mittenfrequenzen der den Reflektorbereichen (211, 212) zugeordneten Empfangsfrequenzbänder sich um eine Zehnerpotenz unterscheiden und dass die Breite (b₁) des unteren Reflektorbereichs (211) ungefähr ein Sechstel und die Breite (b₁) des oberen Reflektorbereichs (212) ungefähr fünf Sechstel der Breite des gesamten Reflektors (21) beträgt.

3. Unterwasserantenne nach Anspruch 2, **dadurch gekennzeichnet, dass** die Dicken (d₂, d₁ bzw. d₄, d₃) sowohl der schallweichen Platte (23) als auch der Masseplatte (24) im unteren Reflektorbereich (211) deutlich größer sind als im oberen Reflektorbereich (212).

4. Unterwasserantenne nach Anspruch 3, **dadurch gekennzeichnet, dass** die Dicke (d₁ bzw. d₂) der schallweichen Platte (23) im oberen Reflektorbereich (212) im einstelligen mm-Bereich, vorzugsweise bei 4 mm, und im unteren Reflektorbereich (211) im zweistelligen mm-Bereich, vorzugsweise bei 15 mm, liegt.

5. Unterwasserantenne nach Anspruch 3 oder 4, **dadurch gekennzeichnet, dass** die Dicke (d₃ bzw. d₄) der Masseplatte (14) im oberen Reflektorbereich (212) im einstelligen mm-Bereich, vorzugsweise bei 4 mm, und im unteren Reflektorbereich (211) im zweistelligen mm-Bereich, vorzugsweise bei 30 mm, liegt.

6. Unterwasserantenne nach einem der Ansprüche 2 bis 5, **dadurch gekennzeichnet, dass** der Abstand (a₂, a₁) der Masseplatte (24) von den Wanderelementen (20) im unteren Reflektorbereich (211) deutlich größer ist als im oberen Reflektorbereich (212).

7. Unterwasserantenne nach einem der Ansprüche 1 bis 6, **dadurch gekennzeichnet, dass** der Reflektor (21) in einem akustisch transparenten Hartumguss (25), vorzugsweise aus Polyurethan, eingeschlossen ist und dass die Reihen der nebeneinander angeordneten Wandlerelemente (20) in aneinanderliegenden Stäben (22) aus akustisch transparentem Material, vorzugsweise Polyurethan, eingeschlossen sind.

8. Unterwasserantenne nach einem der Ansprüche 1 bis 7, **dadurch gekennzeichnet, dass** die Wandleranordnung (15) auf einem Träger (16) angeordnet und der Träger (16) zum Anbau an den Bootskörper (11) so ausgelegt ist, dass im Anbauzustand die Wandleranordnung (15) vertikal ausgerichtet in einem Sektorbereich des Bootskörpers (11) liegt, dessen Sektorachse mit einer durch die Achse des Bootskörpers (11) verlaufenden Horizontalen einen Winkel in der Größenordnung von 30° einschließt, und dass die Wandleranordnung (15) gegenüber einer rechtwinklig zu der Horizontalen verlaufenden Tangente am Bootskörper (11) zurückversetzt ist.

9. Unterwasserantenne nach Anspruch 8, **dadurch gekennzeichnet, dass** der Träger (16) im Bereich des unteren Endes der Wandleranordnung (15) angreifende und am Bootskörper (11) abgestützte Stützstreben (18) aufweist, die gegenüber der vertikal ausgerichteten Wandleranordnung (15) um einen stumpfen Winkel geneigt sind.

## Claims

1. Underwater antenna for mounting on the hull of a submarine with a two-dimensional transducer arrangement (15) extending along the hull (11) in the mounting position, which arrangement has a plurality of electroacoustic transducer elements (20), in particular hydrophones, arranged adjacent to and below one another spaced at a distance, and a reflector (21) arranged behind the electroacoustic transducer elements (20) in the sound incidence direction with a length extending over all transducer elements (20) arranged adjacent to one another and a width extending over all transducer elements (20) arranged below one another, **characterised by** that the reflector (21) is formed as a spring-mass system with a sound-absorbent plate (23), preferably an elastic plate of soft material, and with a grounding plate (24), preferably made of steel or lead, resting on the surface of the plate (23) of soft material that is facing in the sound incidence direction, that the reflector (21) is divided into reflector areas (211, 212) lying below one another, which have a length extending over the length of the reflector (21) and a width (bis, B₂) increasing from the bottom to the top reflector area (211, 212) and are coordinated in their reflection behaviour to receiving frequency bands from different frequency ranges in that the thickness of the reflector (21) seen in the sound incidence direction and the distance of the transducer elements (20) from the reflector (21) in the respective reflector area (211, 212) is coordinated to the centre frequency of a receiving frequency band assigned to the respective reflector area (211, 212), wherein to assign the receiving frequency band from the highest frequency range to the top reflector area (212) in the mounting position the thickness of the reflector (21) and its transducer element spacing in the top reflector area (212) are at their smallest and to assign the receiving frequency band from the lowest frequency range to the bottom reflector area (211) in the mounting position the thickness of the reflector (21) and its transducer element spacing in the bottom reflector area (211) are at their greatest.

2. Underwater antenna according to claim 1, **characterised by** that two reflector areas (211, 212) lying below one another are provided, that the centre frequencies of the receiving frequency bands assigned to the reflector areas (211, 212) differ by a power of ten and that the width (b₁) of the bottom reflector area (211) is roughly a sixth and the width (b₁) of the upper reflector area (212) is roughly five sixths of the width of the entire reflector (21).

3. Underwater antenna according to claim 2, **characterised by** that the thicknesses (d₂, d₁ and d₄, d₃) of both the plate (23) of soft material and of the grounding plate (24) are much greater in the lower reflector area (211) than in the upper reflector area (212).

4. Underwater antenna according to claim 3, **characterised by** that the thickness (d₁ and d₂) of the plate (23) of soft material in the upper reflector area (212) is in the single-digit mm range, preferably at 4 mm, and in the lower reflector area (211) is in the double-digit mm range, preferably at 15 mm.

5. Underwater antenna according to claim 3 or 4, **characterised by** that the thickness (d₃ and d₄) of the grounding plate (14) in the upper reflector area (212) is in the single-digit mm range, preferably at 4 mm, and in the lower reflector area (211) is in the double-digit mm range, preferably at 30 mm.

6. Underwater antenna according to one of claims 2 to 5, **characterised by** that the distance (a₂, a₁) of the grounding plate (24) from the transducer elements (20) in the lower reflector area (211) is much greater than in the upper reflector area (212).

7. Underwater antenna according to one of claims 1 to 6, **characterised by** that the reflector (21) is enclosed in an acoustically transparent hard encapsulation (25), preferably of polyurethane, and that the rows of transducer elements (20) arranged adjacent to one another are enclosed in adjacent rods (22) of acoustically transparent material, preferably polyurethane.

8. Underwater antenna according to one of claims 1 to 7, **characterised by** that the transducer arrangement (15) is arranged on a carrier (16) and the carrier (16) is designed for mounting on the hull (11) such that in the mounted state the transducer arrangement (15) lies vertically oriented in a sector region of the hull (11), the sector axis of which encloses an angle on the order of 30° with a horizontal line running through the axis of the hull (11), and that the transducer arrangement (15) is set back relative to a tangent running perpendicularly to the horizontal on the hull (11).

9. Underwater antenna according to claim 8, **characterised by** that the carrier (16) has support struts (18) engaging in the area of the lower end of the transducer arrangement (15) and supported on the hull (11), which struts are inclined by an obtuse angle relative to the vertically oriented transducer arrangement (15).

## Revendications

1. Antenne sous-marine destinée à être montée sur la coque de navire d'un sous-marin comprenant un ensemble transducteur (15) étendu en surface s'étendant dans la position de montage le long de la coque de navire (11), l'ensemble transducteur présentant une pluralité d'éléments transducteurs électroacoustiques (20), en particulier des hydrophones, agencés les uns à côté des autres et les uns sous les autres espacés entre eux et un réflecteur (21) agencé derrière les éléments transducteurs électroacoustiques (20) dans la direction d'incidence du son, présentant une longueur s'étendant sur tous les éléments transducteurs (20) agencés les uns à côté des autres et une largeur s'étendant sur tous les éléments transducteurs (20) agencés les uns sous les autres, **caractérisée en ce que** le réflecteur (21) est réalisé sous forme de système masse-ressort comprenant une plaque à faible résistance acoustique (23), de préférence une plaque en matière molle élastique, et comprenant une plaque de masse (24), de préférence en acier ou en plomb, reposant sur la surface de la plaque à faible résistance acoustique (23) faisant face à la direction d'incidence du son, **en ce que** le réflecteur (21) est divisé en zones de réflecteur (211, 212) situées les unes sous les autres, qui présentent une longueur s'étendant sur la longueur du réflecteur (21) et une largeur (b₁, B₂) augmentant de la zone de réflecteur la plus basse à la plus haute (211, 212) et qui, en ce qui concerne leur caractéristique de réflexion, sont accordées sur des bandes de fréquences de réception de différentes gammes de fréquences **en ce que** l'épaisseur du réflecteur (21) vue dans la direction d'incidence du son et l'écart entre les éléments transducteurs (20) et le réflecteur (21) dans la zone de réflecteur (211, 212) respective sont accordés sur la fréquence centrale d'une bande de fréquences de réception associée à la zone de réflecteur (211, 212) respective, dans laquelle pour l'association de la bande de fréquences de réception de la gamme de fréquences la plus élevée à la zone de réflecteur (212) la plus haute dans la position de montage, l'épaisseur du réflecteur (21) et son écart avec les éléments transducteurs dans la zone de réflecteur (212) la plus haute sont les plus petits et pour l'association de la bande de fréquences de réception de la gamme de fréquence la plus basse à la zone de réflecteur (211) la plus basse dans la position de montage, l'épaisseur du réflecteur (21) et son écart avec les éléments transducteurs dans la zone de réflecteur (211) la plus basse sont les plus grands.

2. Antenne sous-marine selon la revendication 1, **caractérisée en ce que** deux zones de réflecteur (211, 212) situées l'une sous l'autre sont prévues, **en ce que** les fréquences centrales des bandes de fréquences de réception associées aux zones de réflecteur (211, 212) diffèrent d'une puissance de dix et **en ce que** la largeur (b₁) de la zone de réflecteur inférieure (211) représente environ un sixième et la largeur (b₁) de la zone de réflecteur supérieure (212) environ cinq sixièmes de la largeur du réflecteur entier (21).

3. Antenne sous-marine selon la revendication 2, **caractérisée en ce que** les épaisseurs (d₂, d₁ ou d₄, d₃) aussi bien de la plaque à faible résistance acoustique (23) que de la plaque de masse (24) sont nettement supérieures dans la zone de réflecteur inférieure (211) que dans la zone de réflecteur supérieure (212).

4. Antenne sous-marine selon la revendication 3, **caractérisée en ce que** l'épaisseur (d₁ ou d₂) de la plaque à faible résistance acoustique (23) dans la zone de réflecteur supérieure (212) est de l'ordre du mm à un seul chiffre, de préférence de 4 mm, et dans la zone de réflecteur inférieure (211) de l'ordre du mm à deux chiffres, de préférence de 15 mm.

5. Antenne sous-marine selon la revendication 3 ou 4, **caractérisée en ce que** l'épaisseur (d₃ ou d₄) de la plaque de masse (I4) dans la zone de réflecteur supérieure (212) est de l'ordre du mm à un seul chiffre, de préférence de 4 mm, et dans la zone de réflecteur inférieure (211) de l'ordre du mm à deux chiffres, de préférence de 30 mm.

6. Antenne sous-marine selon l'une des revendications 2 à 5, **caractérisée en ce que** l'écart (a₂, a₁) entre la plaque de masse (24) et les éléments transducteurs (20) est nettement supérieur dans la zone de réflecteur inférieure (211) que dans la zone de réflecteur supérieure (212).

7. Antenne sous-marine selon l'une des revendications 1 à 6, **caractérisée en ce que** le réflecteur (21) est encapsulé dans une enveloppe dure (25) acoustiquement transparente, de préférence en polyuréthane, et **en ce que** les rangées des éléments transducteurs (20) agencés les uns à côté des autres sont encapsulées dans des barrettes (22) en matériau acoustiquement transparent, de préférence en polyuréthane, adjacentes les unes aux autres.

8. Antenne sous-marine selon l'une des revendications 1 à 7, **caractérisée en ce que** l'ensemble transducteur (15) est disposé sur un support (16) et le support (16) destiné au montage sur la coque de navire (11) est configuré de sorte que dans l'état monté, l'ensemble transducteur (15) est orienté verticalement dans une zone de secteur de la coque de navire (11) dont l'axe de secteur forme un angle de l'ordre de 30° avec une horizontale s'étendant à travers l'axe de la coque de navire (11), et **en ce que** l'ensemble transducteur (15) est en retrait par rapport à une tangente à la coque de navire (11) s'étendant perpendiculairement à l'horizontale.

9. Antenne sous-marine selon la revendication 8, **caractérisée en ce que** le support (16) présente des entretoises d'appui (18) s'engageant dans la zone de l'extrémité inférieure de l'ensemble transducteur (15) et appuyées sur la coque de navire (11), qui sont inclinées selon un angle obtus par rapport à l'ensemble transducteur (15) orienté verticalement.
